# NEUE EUROPÄISCHE PATENTSCHRIFT

(11) **EP 0 811 518 B2**
(45) Veröffentlichungstag und Bekanntmachung des Hinweises auf die Entscheidung über den Einspruch: **23.08.2006**
(45) Hinweis auf die Patenterteilung: 23.02.2000
(21) Anmeldenummer: 97106765.7
(22) Anmeldetag: 24.04.1997
(51) Int. Cl.: B60J 7/14

(54) **Fahrzeug, insbesondere mit einem einklappbarem Dach**
Vehicle, particularly with foldable roof
Véhicule, en particulier avec toit pliant

(30) Priorität: 08.06.1996 DE 19623036
(43) Veröffentlichungstag der Anmeldung: 10.12.1997
(73) Patentinhaber: Wilhelm Karmann GmbH, 49084 Osnabrück (DE); Bayerische Motoren Werke Aktiengesellschaft, 80788 München (DE)
(72) Erfinder: Russke, Klaus, 49143 Bissendorf (DE)
(74) Vertreter: Busse & Busse Patentanwälte

(56) Entgegenhaltungen:
- EP-B- 0 332 810
- DE-A- 3 903 358
- DE-A- 4 010 276
- FR-A- 733 380
- FR-B1- 2 706 813
- GB-A- 2 264 747
- US-A- 2 812 975
- US-A- 3 575 464

## Beschreibung

Die Erfindung bezieht sich auf ein Fahrzeug mit einem einklappbaren Dach.

Bei einem bekannten Fahrzeug dieser Art (GB-A-2 264 747) ist zur Betätigung des vorderen Dachteils eine mit einem Ende an der Scharniervorrichtung angreifende, an ihrem anderen Ende mit dem restlichen Teil des Gelenkmechanismus für das Verdeck verbundene Betätigungsstange vorgesehen, welche die von einem hydraulischen Kraftheber aufgebrachte Antriebskraft auf das vordere Dachteil überträgt, wodurch das vordere Dachteil mit seiner Oberseite zur Oberseite des hinteren Dachteils hin umklappbar ist.

Bei einem weiteren bekannten Fahrzeug (US-A-2 812 975) ist ein Fahrzeug mit einem einklappbaren, aus drei Dachteilen bestehenden Dach bekannt. Das Dach ist als Ganzes mittels hydraulischem Hauptantriebszylinder aus einer Schließstellung in eine annähernd senkrechte Offenstellung klappbar, wonach mit Hilfe von dem mittleren und dem hinteren Dachteil zugeordneten weiteren hydraulischen Antriebszylindern die Dachteile in Verschiebebewegungen außergegenseitigen Eingriff gebracht werden anschließend das mittlere und das vordere Dachteil in einer Parallelverlagerung in eine vor dem hinteren Dachteil befindliche Packstellung überführt werden. Die hydraulischen Hauptantriebszylinder für die Bewegung des Daches als Ganzes und die hydraulischen Antriebszylinder für die Bewegung des mittleren und des vorderen Dachteils sind hydraulisch in Reihe geschaltet, so daß beim Öffnungsvorgang die Kraftheber für die Dachteile mit Druckmittel erst beaufschlagt werden, wenn die Klappbewegung des Daches aus der Schließstellung in die annähernd vertikale Offenstellung beendet ist.

Der Erfindung liegt die Aufgabe zugrunde, ein Fahrzeug der eingangs genannten Art so auszubilden, daß die Scharniervorrichtung zwischen dem vorderen und dem hinteren Dachteil mit geringem technischen Aufwand einen großen Schwenkwinkel zu einer raumsparenden Packlage hin ermöglicht und der Antrieb ohne Beeinflussung des Fahrzeug-Innenraums eine einfache Handhabung des aufklappbaren vorderen Dachteils beim Öffnungs- und Schließvorgang des Verdecks erleichtert.

Die Erfindung löst diese Aufgabe durch ein Fahrzeug mit den Merkmalen des Anspruchs 1. Hinsichtlich wesentlicher weiterer Ausgestaltungen wird auf die Unteransprüche verwiesen.

Das erfindungsgemäße Fahrzeug mit seinem von einem Verdeckantrieb unabhängig steuerbaren Antriebsorgan weist ein Antriebsmittel für eine unmittelbare Betätigung der Scharniervorrichtung auf, die auf engstem Raum und mit weitgehend in das Fahrzeugdach integrierbaren Bauteilen eine Schwenkbewegung des vorderen Dachteils über einen Winkel von vorzugsweise mehr als 180° ermöglichen, wobei die unabhängige Steuerung des Antriebsorgans so mit einem heckseitigen Verdeckantrieb synchronisiert werden kann, daß in jeder Bewegungsphase in den Schwenkpunkten der Teile der Scharniervorrichtung und der Dachteile eine hinsichtlich der Belastung optimale Einstellung von Stellkraft und Stellgeschwindigkeit möglich ist. Damit ist ein materialschonender Klappvorgang sowohl für Harttop-Dächer als auch für Dächer mit bereichsweise flexibler Dachhaut erreicht.

In zweckmäßiger Ausführung sind zwei jeweils randseitig in die Dachteile integrierte Scharniervorrichtungen vorgesehen, die sowohl eine stabile Abstützung des vorderen Dachteils während der Öffnungsschwenkbewegung als auch eine genaue Führung bei der Positionierung in der Schließstellung ermöglichen. In dieser Schließstellung sind die beiden Dachteile im Bereich der Scharniervorrichtung lagestabil so in Anlagestellung verbracht, daß sowohl in einem vorderen Schließbereich zum Windschutzscheibenrahmen hin als auch in einem hinteren Bewegungsspalt zwischen den Dachteilen mit hinreichender Sicherheit ein Dichtungseingriff erreicht ist. Über eine entsprechende Anordnung der Schwenkachsen der Scharniervorrichtung bzw. der Scharniervorrichtungen kann mit geringem konstruktivem Aufwand eine Anpassung an unterschiedliche Verschwenkbereiche der Dachteile vorgenommen und eine genaue Führung der Dachteile bei deren gemeinsamer Bewegungsbahn auch bei gleichzeitiger Hub- und Schwenkphase erzielt werden.

Hinsichtlich wesentlicher weiterer Vorteile und Einzelheiten der Erfindung wird auf die nachfolgende Beschreibung und die Zeichnung verwiesen, in der ein Ausführungsbeispiel des Gegenstandes der Erfindung schematisch veranschaulicht ist. In der Zeichnung zeigen:
- Fig. 1: eine Prinzipdarstellung eines Fahrzeug-Teiles in Heckansicht mit einer Scharniervorrichtung zwischen einem vorderen und einem hinteren Dachteil,
- Fig. 2: eine teilweise geschnittene Perspektivdarstellung des Fahrzeuges mit zwei jeweils randseitig an den insbesondere einstückigen, stabilen Dachteilen (Hardtop) angeordneten Scharniervorrichtungen,
- Fig. 3: eine teilweise geschnittene Seitenansicht des Verdecks mit den beiden Dachteilen in Schließstellung ähnlich Fig. 1,
- Fig. 4 bis Fig. 6: jeweilige Bewegungsphasen des vorderen Dachteils bei Betätigung des Scharniervorrichtung,
- Fig. 7: eine vergrößerte Einzeldarstellung der erfindungsgemäßen Scharniervorrichtung in Perspektivdarstellung,

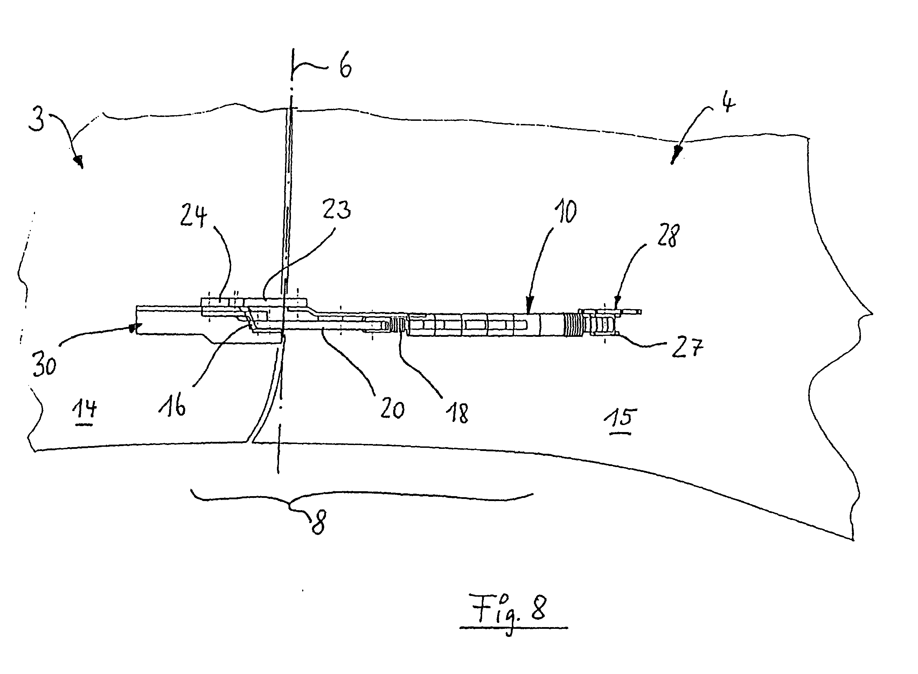

- Fig. 8: eine Ausschnittsdarstellung der beiden Dachteile mit der Scharniervorrichtung in Draufsicht, und
- Fig. 9 bis Fig. 12: jeweils vergrößerte Ausschnittsdarstellungen der Scharniervorrichtung in unterschiedlichen Bewegungsphasen (ähnlich Fig. 4 bis 6).

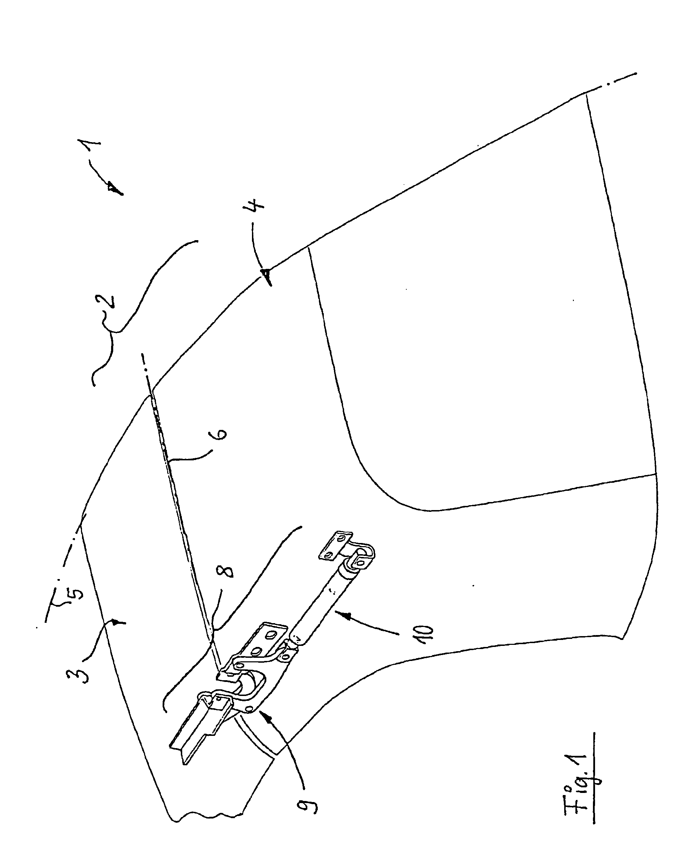

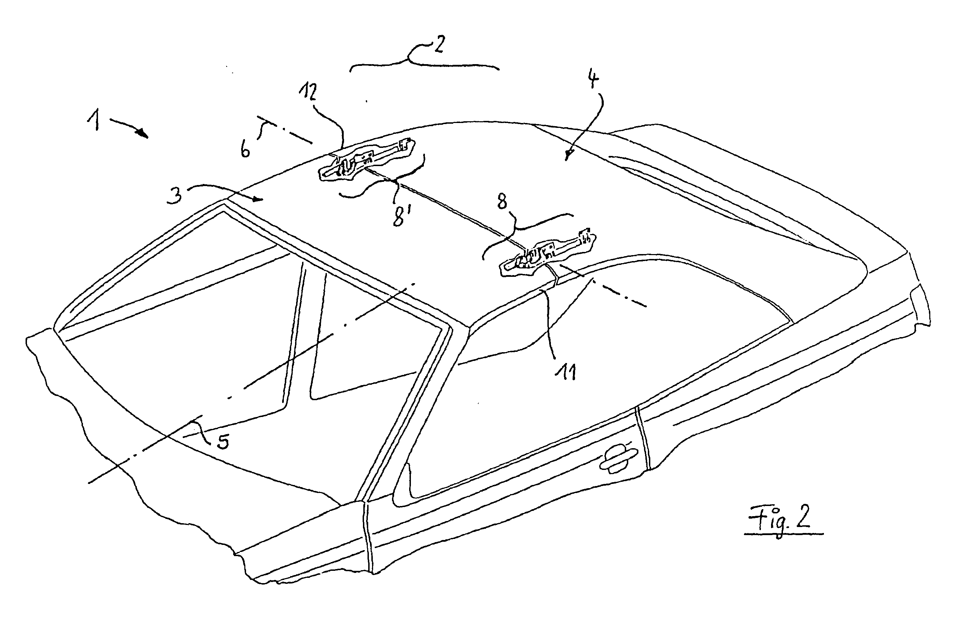

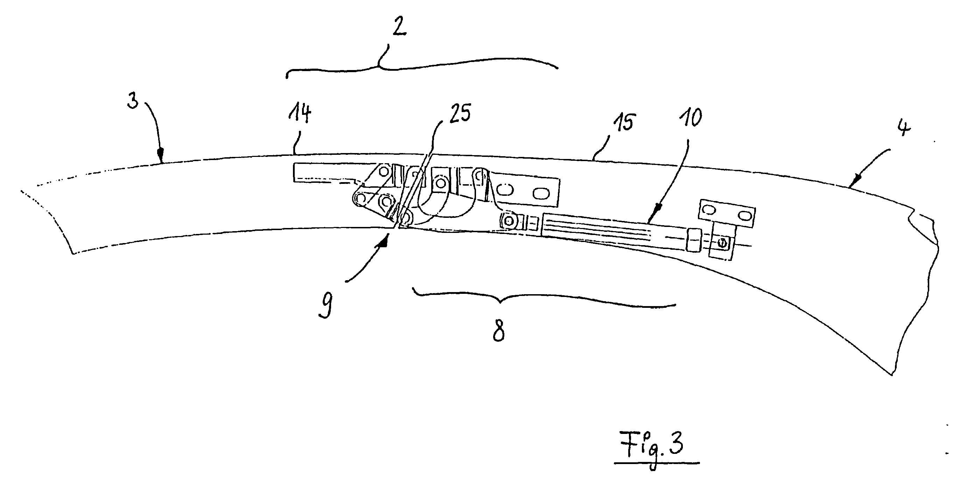

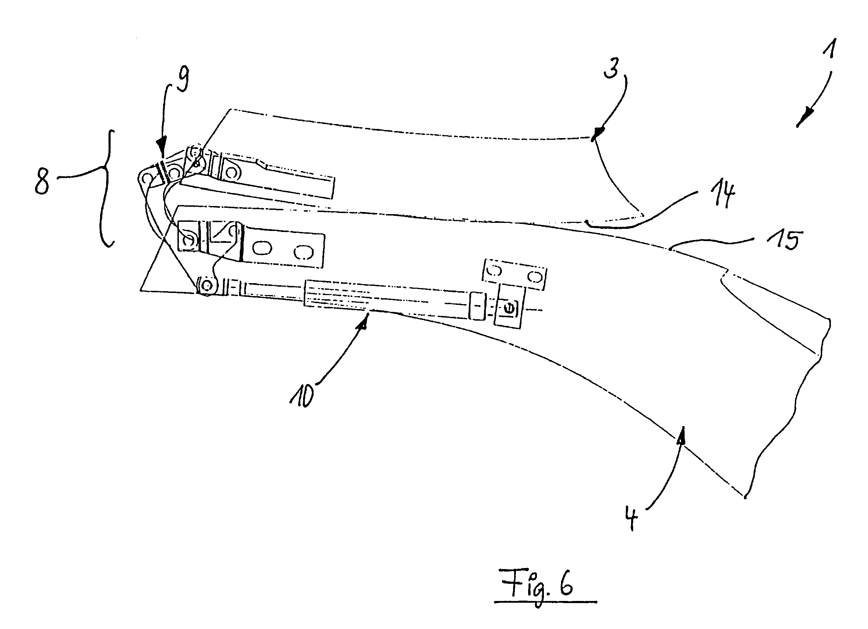

In Fig. 1 und 2 sind Bauteile eines insgesamt mit 1 bezeichneten Fahrzeugs dargestellt, dessen Dach 2 als beweglich mit der Fahrzeugkarosserie verbundene Klappteile ein vorderes Dachteil 3 und ein hinteres Dachteil 4 aufweist, wobei diese Dachteile 3, 4 im Bereich einer senkrecht zur Fahrzeuglängsachse 5 verlaufenden Querachse 6 mit einer eine Schließ- bzw. Öffnungsstellung (Fig. 3 bzw. Fig. 6) des Klapp-Daches 2 ermöglichenden Gelenkverbindung versehen sind.

Die erfindungsgemäße Gelenkverbindung zwischen den Dachteilen 3 und 4 ist als eine insgesamt mit 8 bezeichnete Scharniervorrichtung ausgebildet, deren Schwenkglieder 9 mit zumindest einem steuerbaren Antriebsorgan 10 betätigbar sind.

Die teilweise geschnittene Perspektivdarstellung gemäß Fig. 2 verdeutlicht, daß die beiden Dachteile 3 und 4 mit zwei Scharniervorrichtungen 8, 8' im Bereich der Querachse 6 versehen sind, wobei diese Scharniervorrichtungen 8, 8' als gleiche Baugruppen symmetrisch zur Fahrzeuglängsachse 5 nahe den Seitenrändern 11, 12 des Fahrzeugs 1 angeordnet sind. Ebenso ist denkbar, lediglich nur eine angetriebene Scharniervorrichtung zwischen den Dachteilen 3, 4 vorzusehen, die beispielsweise im Bereich der Fahrzeuglängsachse 5 angeordnet sein kann (nicht dargestellt) oder die Scharniervorrichtungen in einer ebenfalls nicht dargestellten Ausführungsform mit einem gemeinsamen Antriebsorgan und nach beiden Seiten hin wirksamen Übertragungsgliedern zu versehen.

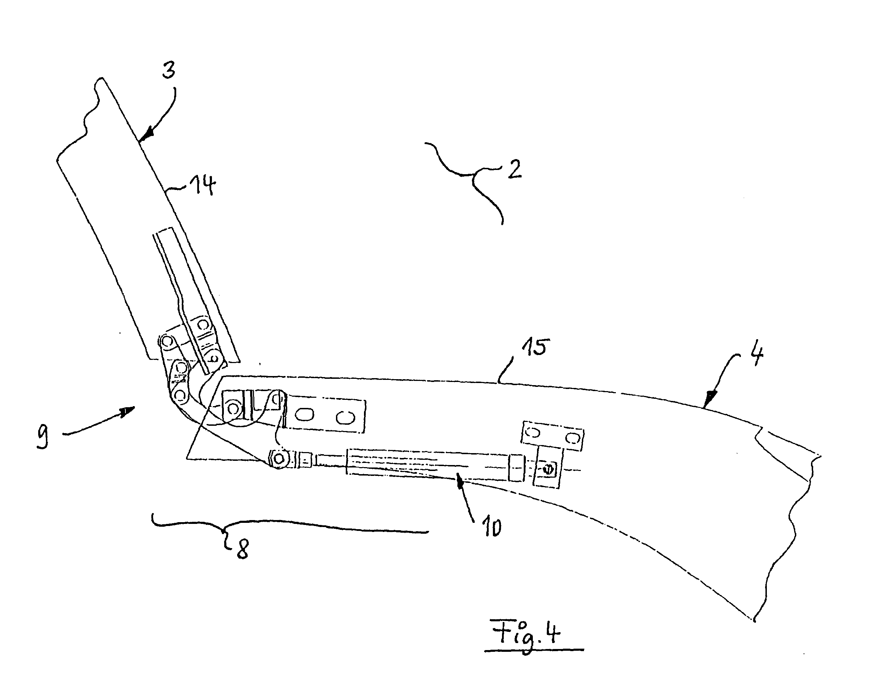

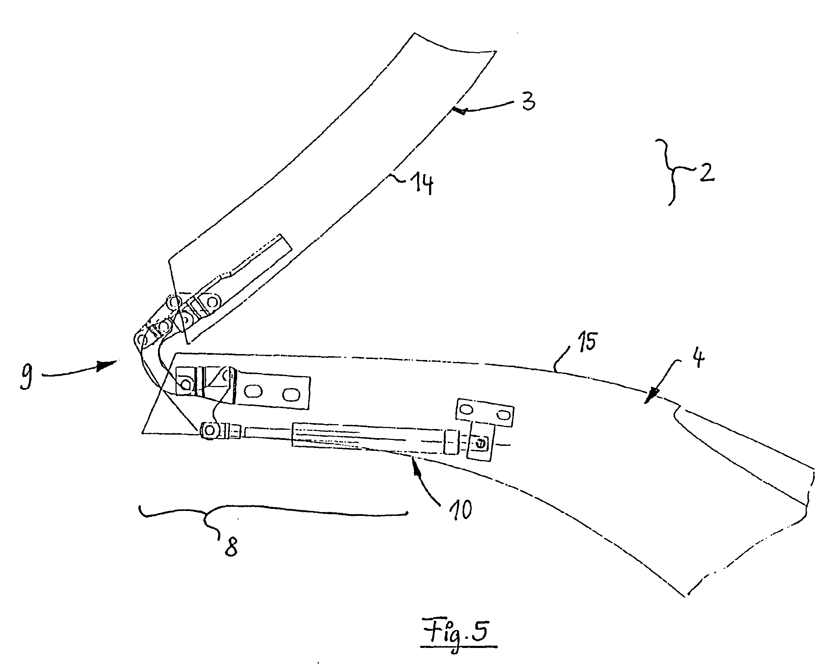

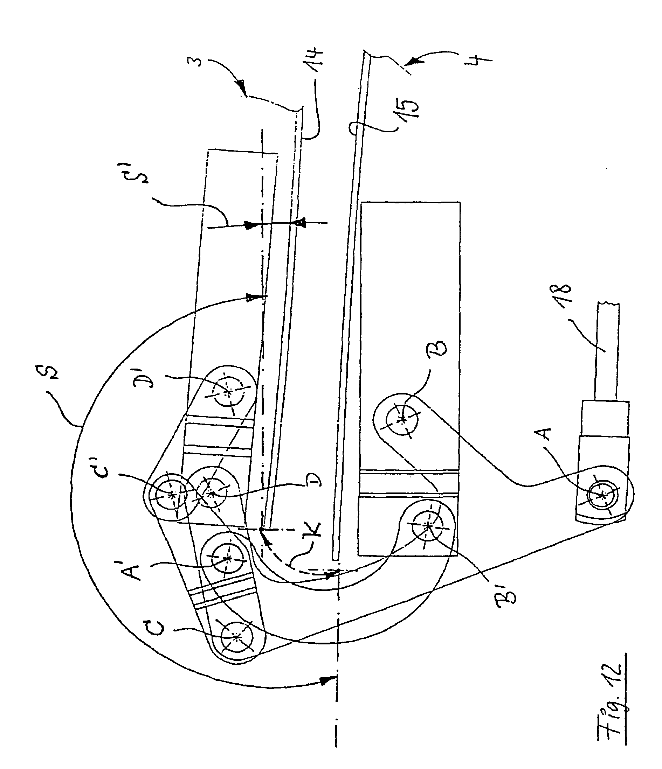

In Fig. 3 bis 6 zeigen jeweilige Ausschnittsdarstellungen des Fahrzeugs 1 die beiden Dachteile 3, 4 in Seitenansichten, wobei ausgehend von einer Schließstellung gemäß Fig. 3 jeweilige unterschiedliche Bewegungsphasen beim Klappvorgang der beiden Dachteile 3, 4 unter wirkung der angetriebenen Scharniervorrichtung 8 deutlich werden. In der Öffnungsstellung gemäß Fig. 6 ist das vordere Dachteil 3 mit seiner Oberseite 14 zur Oberseite 15 des hinteren Dachteils 4 hin verlagert. Die spezielle konstruktive Ausbildung der Schwenkglieder 9 an der erfindungsgemäßen Scharniervorrichtung 8 definiert dabei eine gesteuerte Kurvenbahn (Pfeil K in Fig. 12) mit einem Schwenkwinkel S zwischen den beiden Dachteilen 3, 4. Dieser Schwenkwinkel S kann dabei mehr als 180° betragen (zusätzlicher Winkel S'), so daß eine Annäherung der Dachteile 3, 4 entsprechend ihrer Profilierung im Bereich der Oberseiten 14, 15 möglich und eine raumsparende Packlage erreicht ist.

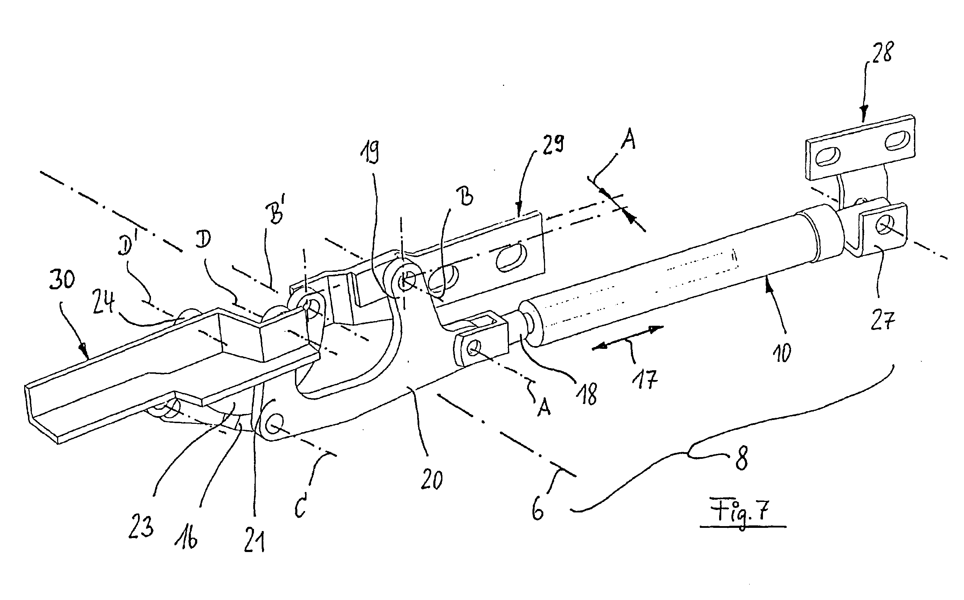

Die vergrößerte Einzeldarstellung gemäß Fig. 7 zeigt die Scharniervorrichtung 8 mit den Schwenkgliedern 9 in einer Explosivdarstellung, wobei als Schwenkglieder 9 zwei jeweils vier Verbindungsachsen A, B, C, D und A', B', C', D'aufweisende Viergelenke vorgesehen sind, deren Einzelelemente gemeinsam in der Gelenkverbindungs-Kette wirksam sind. Die beiden Viergelenke A, B, C, D und A', B', C', D' sind dabei in zweckmäßiger Ausführung über einen Querlenker 16 verbunden, mit dem die Schubbewegung des Antriebsorgans 10 (Pfeil 17) zwischen den beiden Viergelenken gekoppelt ist.

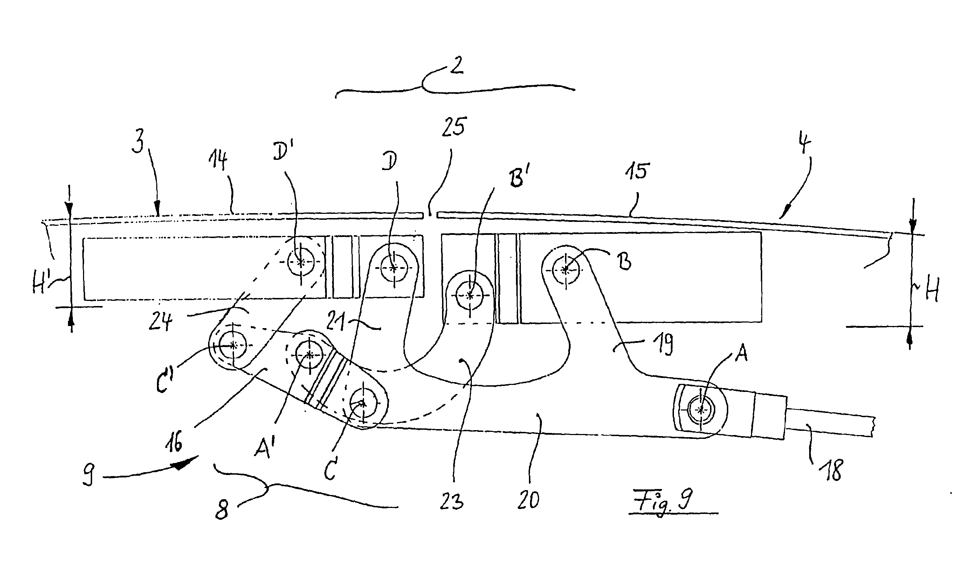

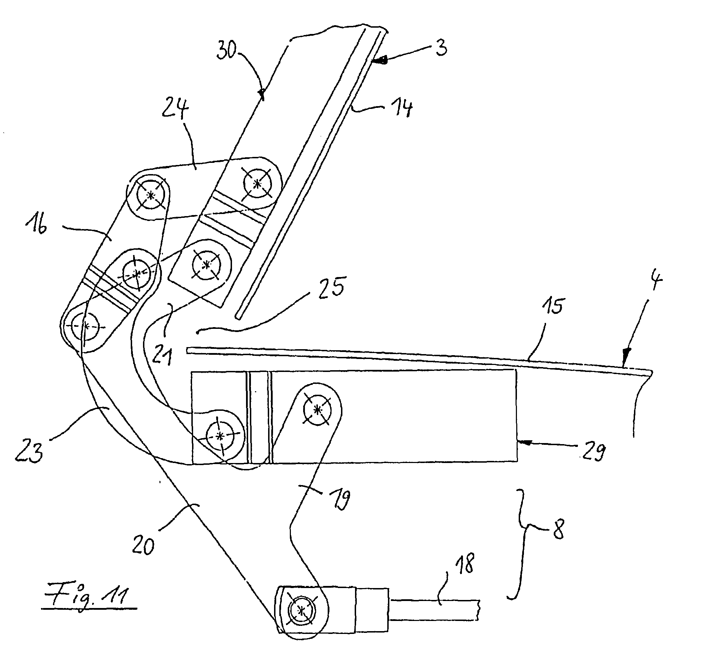

Die Prinzipdarstellungen gemäß Fig. 9 bis 12 verdeutlichen, daß eine Schubstange 18 des in zweckmäßiger Ausführung als Arbeitszylinder ausgebildeten Antriebsorgans 10 an einer Verbindungsachse A eines Gabellenkers 20 angreift, dessen erster Schenkel 19 am hinteren Dachteil 4 in der Verbindungsachse B abgestützt ist. Der Gabellenker 20 weist einen zweiten Schenkel 21 auf, der endseitig direkt am vorderen Dachteil 3 im Bereich der Achse D abgestützt ist. Der Gabellenker 20 ist außerdem im Bereich seines zweiten Schenkels 21 in einer Verbindungsachse C mit dem zweiten Viergelenk über den Querlenker 16 verbunden.

Das zweite Vergelenk A', B', C', D' weist einen im mittleren Bereich des Querlenkers 16 im Bereich der Achse A' angreifenden sowie am hinteren Dachteil 4 in der Achse B' abgestützten Bogenschwingteil 23 auf und im Bereich der Achse C' ist am Querlenker 16 ein mit dem vorderen Dachteil 3 im Bereich der Achse D' verbundener Schwinghebel 24 vorgesehen.

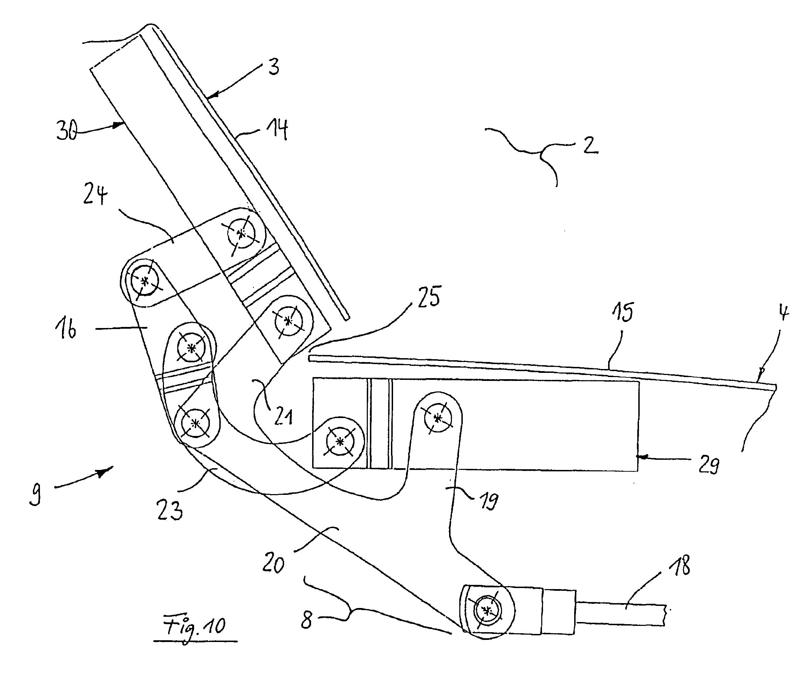

Die Bewegungsphasen-Darstellungen gemäß Fig. 10 bis 12 verdeutlichen unterschiedliche Schwenksteilungen der Schwenkglieder 9 bzw. der Dachteile 3 und 4, wobei unter Wirkung der Schwenkvorrichtung 8 das vordere Dachteil 3 im Bereich eines zum hinteren Dachteil 4 bestehenden Bewegungsspaltes 25 nach Art einer Weitwinkelbewegung die Kurvenbahn K (Fig. 12) derart durchläuft, daß eine Berührung von Dachteilen ausgeschlossen ist und über eine unterschiedliche konstruktive Bemessung der Schwenkglieder 9 insgesamt eine Anpassung an unterschiedliche Bauteilhöhen H, H' der Dachteil-Konsstruktion möglich ist.

Das als Arbeitszylinder ausgebildete Antriebsorgan 10 ist zylinderseitig über eine ein Gelenkprofilteil 27 (Fig. 7) aufweisende Halteplatte 28 am Dachteile 4 festgelegt und die Verbindungsachsen B, B' im Bereich der Schwenkglieder 20 bzw. 23 sind von einer an der Dachteil-Unterseite verlaufenden Stützstrebe 29 gebildet. Im Bereich des vorderen Dachteils 3 sind die Verbindungsachsen D, D' an einer Winkelplatte 30 vorgesehen. Gleichzeitig sind die Verbindungsgelenke B, B' und D, D' jeweils um ein Abstandsmaß A (Fig. 7) in Richtung der Querachse 6 versetzt zueinander angeordnet, so daß die Scharniervorrichtung 8 insgesamt in einen vorteilhaft schmalen Einbauraum montierbar ist.

## Patentansprüche

1. Fahrzeug mit einem einklappbaren Dach (2), das zumindest ein vorderes Dachteil (3) und ein hinteres Dachteil (4) aufweist, die durch zumindest eine dem vorderen Dachteil (3) eine Schließ- und Öffnungsstellung ermöglichende Scharniervorrichtung (8,8') verbunden sind, und mit einem Antriebsorgan (10) zum Öffnen und Schließen des vorderen Dachteils (3) unabhängig vom hinteren Dachteil (4), wobei das von einem heckseitigen Verdeckantrieb unabhängig steuerbare Antriebsorgan (10) die Scharniervorrichtung (8,8') unmittelbar betätigt.

2. Fahrzeug nach Anspruch 1, **dadurch gekennzeichnet, daß** mittels der angetriebenen Scharniervorrichtung (8,8') das vordere Dachteil (3) mit seiner Oberseite (14) zur Oberseite (15) des hinteren Dachteils (4) hin verlagerbar ist.

3. Fahrzeug nach Anspruch 1 oder 2, **dadurch gekennzeichnet, daß** die Scharniervorrichtung (8,8') zwischen den beiden Dachteilen (3,4) einen Schwenkwinkel (S) von mehr als 180° definiert.

4. Fahrzeug nach einem der Ansprüche 1 bis 3, **dadurch gekennzeichnet, daß** die Scharniervorrichtung (8,8') mehrere, eine Gelenkkette (A,B,C,D,A',B',C',D') mit zueinander versetzten Schwenkachsen definierende Schwenkglieder (9) aufweist.

5. Fahrzeug nach einem der Ansprüche 1 bis 4, **dadurch gekennzeichnet, daß** die Scharniervorrichtung (8,8') als Schwenkglieder (9) zwei über einen Querlenker (16) verbundene Viergelenke (A,B,C,D,A',B',C',D') aufweist.

6. Fahrzeug nach einem der Ansprüche 1 bis 5, **dadurch gekennzeichnet, daß** das Antriebsorgan (10) der Scharniervorrichtung (8,8') an einem am hinteren Dachteil (4) über einen ersten Schenkel (19) abgestützten Gabellenker (20) angreift, dessen zweiter Schenkel (21) endseitig direkt am vorderen Dachteil (3) abgestützt und au-ßerdem mit dem zweiten Viergelenk (A',B',C',D') über den Querlenker (16) verbunden ist.

7. Fahrzeug nach einem der Ansprüche 1 bis 6, **dadurch gekennzeichnet, daß** das zweite Viergelenk (A',B',C',D') von einem am Querlenker (16) im mittleren Bereich angreifenden sowie am hinteren Dachteil (4) abgestützten Bogenschwingteil (23) und einem endseitig am Querlenker (16) angreifenden sowie mit dem vorderen Dachteil (3) verbundenen Schwinghebel (24) gebildet ist.

## Claims

1. , Vehicle having a roof (2) able to be folded down, which roof (2) has at least one front roof-part (3) and one rear roof-part (4) which are connected by at least one hinge arrangement (8, 8') which makes a raised and a lowered position possible for the front roof-part (3), and having a drive member (10) for raising and lowering the front roof-part (3) independently of the rear roof-part (4), wherein the drive member (10), which is able to be controlled independently of a folding-top drive at the rear of the vehicle, actuates the hinge arrangement (8, 8') directly.

2. Vehicle according to claim 1, **characterised in that**, by means of the driven hinge arrangement (8, 8'), the upper side (14) of the front roof-part (3) can be displaced towards the upper side (15) of the rear roof-part (4).

3. Vehicle according to claim 1 or 2, **characterised in that** the hinge arrangement (8, 8') defines an angle of pivot (S) of more than 180° between the two roof-parts (3, 4).

4. Vehicle according to one of claims 1 to 3, **characterised in that** the hinge arrangement (8, 8') has a plurality of pivoting members (9) which define a chain of joints (A, B, C, D; A', B', C', D') having axes of pivot which are offset from one another.

5. Vehicle according to one of claims 1 to 4, **characterised in that** the hinge arrangement (8, 8') has, as pivoting members (9), two four-joint linkages (A, B, C, D; A', B', C', D') which are connected by a transverse link (16).

6. Vehicle according to one of claims 1 to 5, **characterised in that** the drive member (10) of the hinge arrangement (8, 8') engages with a bifurcated link (20), which bifurcated link (20) is supported on the rear roof-part (4) by means of a first side (19) of the bifurcation and has the second side (21) of the bifurcation supported, at the end, directly on the front roof-part (3), and is also connected to the second four-joint linkage (A', B', C', D') via the transverse link (16).

7. Vehicle according to one of claims 1 to 6, **characterised in that** the second four-joint linkage (A', B', C', D') is formed by an arcuate swinging part (23) which engages with the transverse link (16) in the latter's central region and is supported on the rear roof-part (4), and by a swinging lever (24) which engages with the transverse link (16) at an end thereof and is connected to the front roof-part (3).

## Revendications

1. Véhicule comportant un toit pliant (2) composé au moins d'une partie avant (3) et d'une partie arrière (4) reliées par un dispositif à charnière (8, 8') permettant d'ouvrir ou de fermer la partie avant (3), et un organe d'entraînement (10) pour ouvrir ou fermer la partie avant (3) indépendamment de la partie arrière (4),
**caractérisé en ce que**
l'organe d'entraînement (10) commandé par un entraînement de capote côté arrière actionne directement le dispositif à charnière (8, 8').

2. Véhicule selon la revendication 1,
**caractérisé en ce que**
le ou les dispositif(s) à charnière (8, 8') entrainé(s) permet(tent) de déplacer la partie avant de toit (3) en rapprochant sa face supérieure (14) de la face supérieure (15) de la partie arrière de toit (4).

3. Véhicule selon la revendication 1 ou 2,
**caractérisé en ce que**
le dispositif à charnière (8, 8') définit entre les deux parties de toit (3, 4) un angle de basculement (S) dépassant 180°.

4. Véhicule selon une des revendications 1 à 3,
**caractérisé en ce que**
le dispositif à charnière (8, 8') comprend plusieurs organes basculants définissant une chaîne articulée (A, B, C, D, A', B', C', B') dont les axes de basculement sont décalés les uns par rapport aux autres.

5. Véhicule selon une des revendications 1 à 4,
**caractérisé en ce que**
le dispositif à charnière (8, 8') a comme organes basculants (9) deux articulations quadruples (A, B, C, D, A', B', C', D') reliées par une bielle transversale (16).

6. Véhicule selon une des revendications 1 à 5,
**caractérisé en ce que**
l'organe d'entraînement (10) du dispositif à charnière (8, 8') est en prise avec une bielle fourchue (20) en appui par une première branche (19) sur la partie arrière de toit (4), tandis que sa seconde branche (21) s'appuie par son extrémité directement sur la partie avant de toit (3) et est de plus reliée à la seconde articulation quadruple (A', B', C', B') par la bielle transversale (16).

7. Véhicule selon une des revendications 1à 6,
**caractérisé en ce que**
la seconde articulation quadruple (A', B', C', E') est constituée par une pièce basculante en arc (23) en prise avec la bielle transversale (16) vers le milieu de celle-ci et en appui sur la partie arrière de toit (4), ainsi que par un levier basculant (24) en prise par son extrémité avec la bielle transversale (16) et relié à la partie avant de toit (3).
